# EUROPÄISCHE PATENTANMELDUNG

(11) **EP 2 103 505 A1**
(43) Veröffentlichungstag der Anmeldung: **23.09.2009**
(21) Anmeldenummer: 08102768.2
(22) Anmeldetag: 19.03.2008
(51) Int. Cl.: B62D 33/04, B60Q 1/26

(54) **Rahmenelement einer Stirnwand und/oder einer Rückwand eines Kofferaufbaus eines Nutzfahrzeugs**

(71) Anmelder: Schmitz Cargobull AG, 48341 Altenberge (DE)
(72) Erfinder: Hessling, Alfons, 48683 Ahaus (DE); Küpers, Josef, 48703 Stadtlohn (DE); Abbing, Heinz, 48683 Ahaus (DE)
(74) Vertreter: Cohausz & Florack

(57) **Zusammenfassung**

Die Erfindung betrifft ein Rahmenelement (1, 1', 1'', 1''', 30, 50, 70) einer Stirnwand und/oder einer Rückwand eines Kofferaufbaus eines Nutzfahrzeugs, mit einem im Wesentlichen geschlossenen Hohlprofil (6, 6', 41, 63), wobei sich das Hohlprofil (6, 6', 41, 63) in Längsrichtung entlang eines Seitenwandpaneels und/oder eines Dachpaneels erstreckt. Um ein Rahmenelement zu schaffen, das einfach, schnell und kostengünstig gefertigt werden kann, ist vorgesehen, dass das Hohlprofil (6, 6', 41, 63) in Längsrichtung zweigeteilt und aus wenigstens einem dem Äußeren des Kofferaufbaus zugeordneten äußeren Teilprofil (3, 35, 51, 74) und einem dem Inneren des Kofferaufbaus zugeordneten inneren Teilprofil (2, 2', 43, 55, 55', 73) zusammengesetzt ist.

## Beschreibung

Die Erfindung betrifft ein Rahmenelement einer Stirnwand und/oder einer Rückwand eines Kofferaufbaus eines Nutzfahrzeugs, mit einem im Wesentlichen geschlossenen Hohlprofil, wobei sich das Hohlprofil in Längsrichtung entlang eines Seitenwandpaneels und/oder eines Dachpaneels erstreckt.

Kofferaufbauten von Nutzfahrzeugen mit so genannten Rückwand- bzw. Stirnwandrahmen sind in verschiedenen Ausführungen bekannt. Vielfach bilden die Rückwand- bzw. Stirnwandrahmen ein separates Bauteil des Kofferaufbaus und werden als solche an zwei Seitenwandpaneelen und einem Dachpaneel des Kofferaufbaus, die ihrerseits bereits miteinander verbunden worden sind, montiert. In einigen Fällen kommen allerdings auch so genannte geteilte Stirnwand- bzw. Rückwandrahmen zum Einsatz. In diesem Fällen wird jedes Seitenwandpaneel und das Dachpaneel bereits zusammen mit einem Rahmenelement eines Stirnwand- bzw. Rückwandrahmens gefertigt. Der Stirnwand- bzw. Rückwandrahmen als solcher entsteht dann mit dem Fügen der Seitenwandpaneele an das Dachpaneel.

Die bekannten Rahmen weisen Profilelemente auf, deren Form zwar von Fall zu Fall variieren kann, die allerdings stets U-förmig ausgebildet sind. Das geschlossene Ende der U-Form weist dabei vom Kofferaufbau weg. Somit ist der Rahmen nach außen im Wesentlichen geschlossen. Mit dem offenen Ende des U-förmigen Profilelements ist dieses dann mit einem Seitenwandpaneel und/oder einem Dachpaneel des Kofferaufbaus verbunden.

Im Ergebnis stellen die entsprechenden Profilelemente Hohlprofile dar, was zu einer Gewichtseinsparung führt und ein problemloses Einfügen von Verstärkungselementen zur Aussteifung des entsprechenden Rahmens ermöglicht. Hierbei kommen insbesondere so genannte Eckverstärker in Frage, welche zur Verstärkung der Ecken des entsprechenden Rahmens verwendet werden. Auf diese Weise kann letztlich die Stabilität, insbesondere die Verwindungssteifigkeit, des gesamten Kofferaufbaus erhöht werden. Im Übrigen ermöglichst die Ausrichtung der U-förmigen Rahmen ein einfaches Aufstecken des Rahmens bzw. von Rahmenteilen auf ein Seitenwandpaneel und/oder ein Dachpaneel.

Nachteilig an den bekannten Rahmenelementen ist jedoch, dass diese zu einem nicht unerheblichen Teil an den Fertigungskosten des gesamten Kofferaufbaus beitragen. Dies ist insbesondere auch dem hohen Arbeitsaufwand beim Fertigen und Anbringen der Rahmen an den Kofferaufbau geschuldet.

Vor diesem Hintergrund liegt der Erfindung die Aufgabe zu Grunde, ein Rahmenelement zu schaffen, das einfach, schnell und kostengünstig gefertigt werden kann.

Diese Aufgabe ist erfindungsgemäß durch die Lehre des Anspruchs 1 gelöst worden. In den auf den Anspruch 1 rückbezogenen Ansprüchen sind vorteilhafte Ausgestaltungen dieser Lehre angegeben.

Das erfindungsgemäße Hohlprofil des Rahmenelements ist also in Längsrichtung geteilt ausgebildet. Das heißt mit anderen Worten, dass das äußere Teilprofil und das innere Teilprofil entlang des wenigstens einen Seitenwandpaneels oder Dachpaneels miteinander verbunden sind. Vorzugsweise liegen die Verbindungsstellen der Teilprofile in einer Ebene mit dem jeweils zugehörigen Seitenwandpaneel oder dem Dachpaneel. Dabei stellt das Innere des Kofferaufbaus im Gegensatz zum Äußeren des Kofferaufbaus den durch den Kofferaufbau eingeschlossenen Raum dar.

In diesem Zusammenhang ist die erfindungsgemäße Lehre nicht dahingehend zu verstehen, dass das äußere Teilprofil und das innere Teilprofil entlang der Trennungslinie zwischen dem Inneren und dem Äußeren des Kofferaufbaus miteinander verbunden sein müssen. Die Begriffe Innen und Außen sollen lediglich die Lage der wenigstens zwei Teilprofile des Hohlprofils angeben.

Ferner ist im Sinne der Erfindung mit einem im Wesentlichen geschlossenen Hohlprofil ein solches gemeint, das ohne weiteres geschlossen sein kann. Ist dies nicht in Gänze der Fall, so ist die Öffnung vorzugsweise in Richtung des zugehörigen Seitenwandpaneels oder Dachpaneels ausgerichtet. Somit ist eine etwaige Öffnung in einer Seitenwand oder einem Dach angeordnet und stellt daher keine Öffnung des Hohlprofils zur Umgebung des Kofferaufbaus dar. Dennoch können bedarfsweise auch entsprechende Öffnungen vorgesehen sein, die dann insbesondere speziellen lokalen Funktionalitäten des Hohlprofils geschuldet sind. Diese Öffnungen können also beispielsweise zur Aufnahme von Anbauteilen oder dergleichen dienen. Grundsätzlich ist das Hohlprofil aber überwiegend geschlossen ausgebildet, um ein Eindringen von Schutz oder Feuchtigkeit zu vermeiden. Dementsprechend sind entsprechende und diesem Zwecke dienende Abdeckungen oder dergleichen weniger als separate Bauelemente, sondern als Elemente des Hohlprofils bzw. eines der Teilprofile aufzufassen. Dies bedeutet wiederum nicht, dass das Hohlprofil nicht noch weitere Teilprofile aufweisen könnte. Zudem können am Hohlprofil noch zusätzliche Profile angebracht sein.

Ein wesentlicher Vorteil der erfinderischen Lehre besteht beispielsweise darin, dass Kofferaufbauen für unterschiedliche Anwendungen und/oder Kofferaufbauten in unterschiedlichen Wandstärken oder ähnliches ohne weiteres unter Verwendung eines standardisierten Baukastenprinzips und somit mit einer minimalen Anzahl unterschiedlicher Komponenten hergestellt werden können. Es müssen also für unterschiedliche Kofferaufbauten nicht unterschiedliche jeweils speziell hergestellte Rahmenprofilelemente bereitgestellt werden.

Beispielsweise können das innere Teilprofil und das äußere Teilprofil in standardisierten Maßen gefertigt werden, die dann untereinander zu einer Vielzahl verschiedener Rahmenelemente kombiniert werden können. Es kann auch vorgesehen sein, dass das äußere Teilprofil in unterschiedlichen Verwendungen stets identisch bleibt und mit einem inneren Teilprofil kombiniert wird, welches die jeweils erforderliche Funktionalität bereitstellt. Dann müssen für die verschiedenen Verwendungen nur unterschiedliche innere Teilprofile bereitgestellt werden, was kostengünstiger ist, als die gesamten Rahmenelemente für die unterschiedlichen Verwendungen bereitzustellen.

Ein weiterer Vorteil der erfindungsgemäßen Lehre liegt darin, dass die Zweiteiligkeit des Hohlprofils in Längsrichtung eine einfache und schnelle Vorkonfektionierung des Stirnwandrahmens und/oder des Rückwandrahmens erlaubt. So können etwa standardisierte Teilprofile zur Herstellung des Kofferaufbaus verwendet werden, die dann mit einem auf den Einzelfall abgestimmten Bohrbild zur Befestigung bestimmter Ausstattungskomponenten versehen werden. Da bei diesem Fertigungsschritt nur Teilprofile anstelle des gesamten Hohlprofils gehandhabt werden müssen, ist der Fertigungsschritt einfacher und schneller, d.h. letztlich kostengünstiger durchzuführen, auch wenn die einzelnen Teilprofile noch in einem zusätzlichen Fertigungsschritt miteinander verbunden werden müssen.

Im Ergebnis hat die Erfindung also erkannt, dass durch eine entsprechend kompliziertere Ausgestaltung des Rahmenelements eine Vereinfachung und Beschleunigung der Fertigung sowie eine damit einhergehende Kostenreduzierung erreicht werden kann.

Unter dem Begriff Nutzfahrzeuge im Sinne der Erfindung werden grundsätzlich alle Fahrzeuge zum Transport von Gütern verstanden. Insbesondere handelt es sich bei den Nutzfahrzeugen aber um Lastkraftwagen, deren Anhänger oder Auflieger, die auch als Trailer bezeichnet werden.

Eine erste vorteilhafte Ausgestaltung der Erfindung sieht vor, dass das äußere Teilprofil einen Teil einer äußeren Hülle des Kofferaufbaus bildet. Dadurch wird ein einfacher Aufbau des Rahmenelements erreicht. Es sind keine weiteren Teilprofile, Blenden oder dergleichen notwendig, um den äußeren Abschluss des Kofferaufbaus herzustellen.

Alternativ oder zusätzlich kann das innere Teilprofil einen Teil einer inneren Hülle des Kofferaufbaus bilden. Dadurch werden die gleichen Vorteile erzielt wie bei dem äußeren Teilprofil als Teil der äußeren Hülle des Kofferaufbaus. Dementsprechend ist es besonders bevorzugt, wenn das Hohlprofil insgesamt sowohl einen Teil der inneren Hülle als auch einen Teil der äußeren Hülle des Kofferaufbaus bildet.

Nach einer weiteren Ausgestaltung der Erfindung ist im Hohlprofil wenigstens eine interne Ausstattungskomponente aufgenommen. Auf diese Weise können die internen Ausstattungskomponenten einfach und schnell in das Rahmenelement integriert werden. Bei den internen Ausstattungskomponenten handelt es sich um Komponenten, die hauptsächlich in das Hohlprofil integriert werden und dabei von außen überwiegend nicht sichtbar sind. Bei den internen Ausstattungskomponenten kann es sich beispielsweise um Eckverstärker oder aber auch um Beleuchtungseinrichtungen handeln, wobei insbesondere die Beleuchtungseinrichtungen teilweise aus dem Hohlprofil herausgeführt sein können.

Dazu sind im Hohlprofil gegebenenfalls entsprechende Ausnehmungen vorgesehen. Bei den Eckverstärkern kann es sich wiederum um solche handeln, die sich über das zu verstärkende Eck erstrecken und somit eine Art Knick oder dergleichen aufweisen. Es können aber auch Eckverstärker eingesetzt werden, die sich lediglich abschnittsweise entlang eines Seitenwandpaneels erstrecken und bedarfsweise mit weiteren Strukturkomponenten verschraubt oder sonst wie verbunden sind.

Die internen Ausstattungskomponenten sind bevorzugt nicht im Hohlprofil aufgenommen, sondern wenigstens an dem äußeren Teilprofil oder dem inneren Teilprofil befestigt. Dadurch wird letztlich eine Vorkonfektionierung ermöglicht, bei der die entsprechenden internen Ausstattungskomponenten vor dem Verbinden der Teilprofile untereinander mit einem Teilprofil verbunden werden. Das kann deutlich einfacher und schneller erfolgen als das Einbringen der internen Ausstattungskomponenten in das bereits fertige Hohlprofil. Beim Verbinden der Teilprofile werden die internen Ausstattungskomponenten letztlich automatisch in das Hohlprofil integriert.

Dabei bietet es sich insbesondere an, wenn wenigstens eine Verbindung zum Befestigen der internen Ausstattungskomponente am Hohlprofil und gleichzeitig zum Verbinden des inneren Teilprofils und des äußeren Teilprofils miteinander vorgesehen ist. In diesem Fall wird beispielsweise eine Vorkonfektionierung derart durchgeführt, dass eine Ausstattungskomponente in ein entsprechendes Teilprofil ohne endgültige Fixierung eingebracht wird. Die interne Ausstattungskomponente kann beispielsweise in ein Teilprofil eingelegt werden, wo es mehr oder weniger formschlüssig gehalten wird. Die endgültige Fixierung erfolgt dann erst beim Verbinden von innerem und äußerem Teilprofil, wobei die Fixierung der Teilprofile untereinander und der jeweiligen internen Ausstattungskomponenten im Hohlprofil in einem einzigen Arbeitsschritt etwa durch Verschrauben erfolgt.

Nach einer weiteren Ausgestaltung der Erfindung ist alternativ oder zusätzlich am Hohlprofil wenigstens eine externe Ausstattungskomponente in Form eines Scharnierelements oder eines Ladebordwandprofils zur Aufnahme und/oder Abdichtung einer Ladebordwand befestigt. Auf diese Weise kann bei der Herstellung unterschiedlicher Kofferaufbauten bzw. unterschiedlicher Rahmenelemente auf ein gegebenenfalls erweitertes Baukastenprinzip unter Einsparung der erforderlichen Zahl unterschiedlicher Halbzeuge zurückgegriffen werden. Es können also standardisierte Teilprofile verwendet werden, die dann für die jeweilige Verwendung mit einem Bohrbild oder dergleichen versehen werden, womit dann die externe Austauschkomponente automatisch richtig platziert angebracht werden kann. Dabei kann dann ein und dasselbe Scharnier für unterschiedliche Rahmenelemente Verwendung finden.

Auch in diesem Zusammenhang kann wenigstens eine Verbindung zum Befestigen der externen Ausstattungskomponente am Hohlprofil und gleichzeitig zum Verbinden des inneren Teilprofils und des äußeren Teilprofils miteinander vorgesehen sein. Dabei werden dann grundsätzlich die gleichen bereits für die Verbindung der Teilprofile zusammen mit der Fixierung der internen Ausstattungskomponenten beschriebenen Vorteile erreicht.

Zur weiteren Vereinfachung und Beschleunigung der Montage kann dann wenigstens eine Verbindung zum Befestigen einerseits der internen Ausstattungskomponente und andererseits der externen Ausstattungskomponente am Hohlprofil sowie gleichzeitig zum Verbinden des inneren Teilprofils und des äußeren Teilprofils miteinander vorgesehen sein. Dies bedeutet, dass insbesondere dort, wo interne und externe Ausstattungskomponenten überlappend am Hohlprofil vorgesehen werden sollen, eine einzige Verbindung, vorzugsweise Schraubverbindung, ausreicht, um an der entsprechenden Stelle des Rahmenelements die Teilprofile untereinander aber auch die internen und externen Ausstattungskomponenten mit dem Hohlprofil zu verbinden.

Das bereits beschriebene Baukastenprinzip lässt sich bei dem Rahmenelement alternativ oder zusätzlich auch dadurch nutzen, dass das innere Teilprofil zur Aufnahme eines Rolltors ausgebildet ist. In diesem Fall kann beispielsweise immer das gleiche äußere Teilprofil oder wenigsten eine sehr geringe Zahl verschiedener äußerer Teilprofile verwendet werden. Dabei spielt es dann keine Rolle, ob das Rahmenelement, bei dem es sich in diesem Fall um ein Rückwandrahmenelement handeln wird, für einen Kofferaufbau mit Türen, mit einer Ladebordwand oder mit einem Rolltor vorgesehen ist. Im Falle eines Rolltors wird einfach ein inneres Teilprofil mit dem äußeren Teilprofil verbunden, was entsprechende Mittel umfasst, welche für die Funktionalität einer Ladebordwand erforderlich sind.

So kann etwa vorgesehen sein, dass sich das innere Teilprofil wenigstens abschnittsweise entlang des Dachpaneels erstreckt und zur Aufnahme eines Rolltors ausgebildet ist. Das innere Teilprofil weist dabei insbesondere eine Verblendung sowie ggf. Aufnahmen für die Rolltormechanik und/oder das Rolltor selbst auf. Alternativ oder zusätzlich kann sich das innere Teilprofil wenigstens abschnittsweise entlang wenigstens eines Seitenwandpaneels erstrecken und im entsprechenden Abschnitt zur Führung eines Rolltors ausgebildet sein. Das innere Teilprofil weist dann vorzugsweise eine Führungsschiene für das Rolltor und/oder entsprechende Führungseinrichtungen auf.

Es müssen also für die unterschiedlichen zu produzierenden Rahmenelemente zur Verwendung mit Rolltoren nicht eine Vielzahl spezieller Rahmenprofile bereitgehalten werden, da die entsprechenden Rahmenprofile aus standardisierten Grundkomponenten zusammengesetzt werden können.

Nach einer weiteren Ausgestaltung der Erfindung bildet das Hohlprofil eine sich parallel zum Dachpaneel oder dem wenigstens einen Seitenwandpaneel erstreckende Kante des Kofferaufbaus, wobei das äußere Teilprofil wenigstens einen Teil der Außenseite der Kante und das innere Teilprofil wenigstens einen Teil der Innenseite der Kante bildet. Das Hohlprofil kann dann ohne weiteres zur Verbindung zweier über Eck zueinander stehender Paneelelemente genutzt werden. Dies bietet sich insbesondere bei der Anbindung einer Stirnwand des Kofferaufbaus beispielsweise an das Dachpaneel des Kofferaufbaus an.

Dabei kann das innere Teilprofil und das äußere Teilprofil ein nach unten geöffnetes Nutprofil zum Einstecken eines Stirnwandpaneels bilden. Die bedeutet insbesondere, dass das innere Teilprofil eine innere Nutflanke und das äußere Teilprofil eine äußere Nutflanke bildet. Dies ermöglicht es letztlich, durch das Verbinden des inneren und des äußeren Teilprofils gleichzeitig den Anschluss der Kante an ein Paneelelement wie etwa ein Stirnwandpaneel zu bilden.

Bei einer anderen Ausgestaltung der Erfindung weist das äußere Teilprofil oder das innere Teilprofil einen dem wenigstens einen Seitenwandpaneel zugeordneten Seitenwandabschnitt und einen dem Dachpaneel zugeordneten Dachabschnitt auf. Dabei sind der Dachabschnitt und der Seitenwandabschnitt durch einen Eckabschnitt miteinander verbunden, der wiederum durch Biegen um eine Achse senkrecht zur Längsrichtung des äußeren Teilprofils oder des inneren Teilprofils geformt ist. Die Biegeachse steht mit anderen Worten senkrecht zu sowohl dem Seitenwandabschnitt als auch dem Dachabschnitt. Im Falle eines quaderförmigen Kofferaufbaus ist die Biegeachse parallel zu der Kante zwischen dem Dachpaneel und dem jeweiligen Seitenwandpaneel.

Diese Ausgestaltung des Rahmenelements erlaubt es, das Rahmenelement wenigstens teilweise durch Umbiegen aus einem gestreckten Zustand zu schaffen. Komplizierte Montageschritte zum abgedichteten Verbinden einzelner Rahmenteile in den Eckabschnitten des Kofferaufbaus können folglich unterbleiben. Insbesondere können die jeweiligen lang gestreckten Teilprofile möglichst weit vorkonfektioniert werden. Vor dem Umbiegen sind die Profile noch auf kleinem Raum einfach handhabbar. Anschließend muss das entsprechende Teilprofil nur noch umgebogen werden, wobei das weitere Teilprofil nachträglich angebracht werden kann oder bereits vorher angebracht sein kann.

Weiter bevorzugt ist es aus den genannten Gründen, wenn das äußere Teilprofil oder das innere Teilprofil zwei jeweils einem Seitenwandpaneel zugeordnete Seitenwandabschnitte und ein dem Dachpaneel zugeordneten Dachabschnitt aufweist und dass der Dachabschnitt an gegenüber liegen Enden jeweils durch einen durch Biegen um eine Achse senkrecht zur Längsrichtung des äußeren Teilprofils oder des inneren Teilprofils geformten Eckabschnitt mit einem Seitenwandabschnitt verbunden ist. Auf diese Weise kann dann ein kompletter Rückwandrahmen einfach und schnell gefertigt werden.

Die Vorteile des Vorkonfektionierens werden weiter ausgenutzt, wenn das Hohlprofil ein dem wenigstens einen Seitenwandpaneel zugeordneten Seitenwandabschnitt und ein dem Dachpaneel zugeordneten Dachabschnitt aufweist, wobei dann wiederum der wenigstens eine Seitenwandabschnitt und der Dachabschnitt durch einen durch Biegen um eine Achse senkrecht zur Längsrichtung des äußeren Teilprofils geformten Eckabschnitt miteinander verbunden sind. Mit anderen Worten umfasst das Vorkonfektionieren in diesem Fall auch noch die Verbindung zwischen dem inneren Teilprofil und dem äußeren Teilprofil. Erst anschließend erfolgt das Umbiegen des gesamten Hohlprofils.

Auch in diesem Zusammenhang ist es zur Fertigung beispielsweise von ganzen Rückwandrahmen von Vorteil, wenn das Hohlprofil zwei jeweils einem Seitenwandpaneel zugeordnete Seitenwandabschnitte und einen dem Dachpaneel zugeordneten Dachabschnitt aufweist. Dann ist der Dachabschnitt an gegenüber liegen Enden jeweils durch einen durch Biegen um eine Achse senkrecht zur Längsrichtung des Hohlprofils geformten Eckabschnitt mit einem Seitenwandabschnitt verbunden.

Je nach der Gestaltung des entsprechenden Teilprofils oder Hohlprofils kann das innere Teilprofil, äußere Teilprofil und/oder Hohlprofil insgesamt im Bereich des wenigstens einen Eckabschnitts eine Ausnehmung zur Vereinfachung der Biegung aufweisen. Mit der Aussparung ist letztlich für das Biegen überschüssiges Material entfernt worden. Es kommt daher im Eckbereich nicht zu einer störenden Faltenbildung.

Es kann auch als Eckabschnitt ein Zwischenprofil eingesetzt oder aufgesetzt werden, das sich leichter umbiegen lässt. Bei diesem Zwischenprofil handelt es sich dann vorzugsweise um einen flächigen Materialstreifen, der ähnlich einem Filmscharnier wirkt. Weiter vorzugsweise kommt dann im Eckabschnitt noch ein Zusatzprofil in Frage, welches dann mit dem Zwischenprofil verbunden wiederum ein hohlprofilartiges Rahmenelement bildet.

Unabhängig davon wird vorzugsweise ein stranggepresstes oder extrudiertes inneres Teilprofil und/oder äußeres Teilprofil verwendet, da diese sich kostengünstig in größeren Stückzahlen herstellen lassen.

Alternativ oder zusätzlich kann das innere Teilprofil und/oder äußere Teilprofil aus einem thermoplastischen Kunststoffmaterial, vorzugsweise Acrylnitril-Butadien-Styrol-Copolymerisat (ABS), gefertigt sein. Dieses Material weist eine hohe Widerstandsfähigkeit für die gewünschte Verwendung auf und lässt sich ohne weiteres biegen, wenn es auf Temperaturen deutlich über 100° C erwärmt wird. Das innere Teilprofil und/oder äußere Teilprofil kann aber auch aus einem metallischen Werkstoff gefertigt sein. Dies kann kalt verformt oder aber bevorzugt warm verformt sein. Insbesondere kommt als wärmeformbares metallisches Material Aluminium in Betracht.

Nachfolgend wird die Erfindung anhand einer lediglich Ausführungsbeispiele darstellenden Zeichnung näher erläutert.

Es zeigen:
- Fig. 1: ein Nutzfahrzeug mit einem einen Rückwandrahmen und einen Stirnwandrahmen aufweisenden Kofferaufbau;
- Fig. 2: ein erstes erfindungsgemäßes Rahmenelement in Form eines Rückwandrahmens mit einer darin integrierten Beleuchtungseinrichtung in einer Schnittansicht entlang einer Schnittebene senkrecht zur Längserstreckung des Rahmenelements;
- Fig. 3: ein zweites erfindungsgemäßes Rahmenelement in Form eines Rückwandrahmens mit einem Scharnier in einer Schnittansicht entlang einer Schnittebene senkrecht zur Längserstreckung des Rahmenelements;
- Fig. 4: ein drittes erfindungsgemäßes Rahmenelement in Form eines Rückwandrahmens mit einem Ladebordwandprofil in einer Schnittansicht entlang einer Schnittebene senkrecht zur Längserstreckung des Rahmenelements;
- Fig. 5: ein viertes erfindungsgemäßes Rahmenelement in Form eines Rückwandrahmens mit einem eine Führung für eine Rolltor aufweisenden inneren Teilprofil in einer Schnittansicht entlang einer Schnittebene senkrecht zur Längserstreckung des Rahmenelements;
- Fig. 6: einen Eckabschnitt eines fünften erfindungsgemäßen Rahmenelements schematisiert in Draufsicht;
- Fig. 7: ein Halbzeug eines sechsten erfindungsgemäßen Rahmenelements schematisiert in Draufsicht;
- Fig. 8: das sechste erfindungsgemäße Rahmenelement aus Fig. 6 nach der Fertigstellung und

- Fig. 9: ein siebtes erfindungsgemäßes Rahmenelement in Form eines Stirnwandrahmens in einer Schnittansicht entlang einer Schnittebene senkrecht zur Längserstreckung des Rahmenelements.

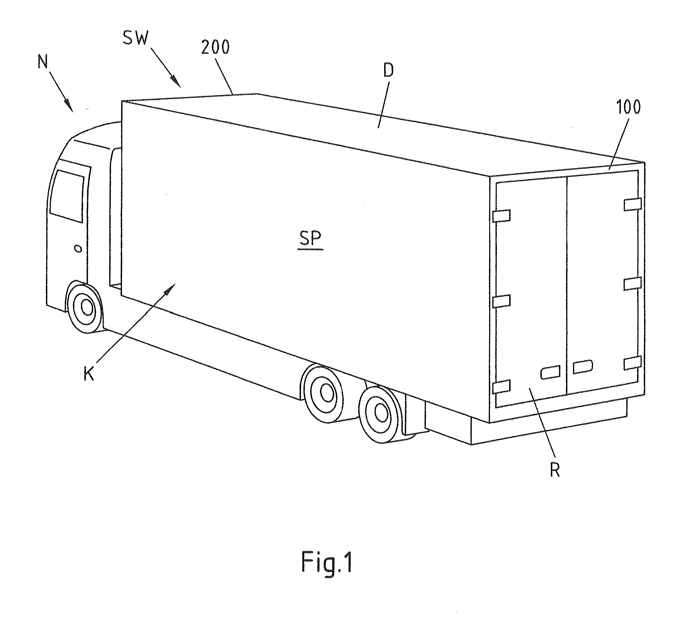

In der Fig. 1 ist ein Nutzfahrzeug mit einem einen Rückwandrahmen 100 und einen Stirnwandrahmen 200 aufweisenden Kofferaufbau K schematisch dargestellt. Bei dem Nutzfahrzeug N handelt es sich um einen Lastkraftwagen, welcher den Kofferaufbau K unmittelbar trägt. Der Kofferaufbau weist zwei gegenüberliegende Seitenwandpaneele SP, ein Dachpaneel D und einen nicht näher dargestellten Boden auf. Zudem ist an der Rückseite eine im dargestellten Ausführungsbeispiel durch Türen gebildete Rückwand R vorgesehen, die über den Rückwandrahmen 100 mit dem Dachpaneel D und den gegenüberliegenden Seitenwandpaneelen SP verbunden ist. An der Stirnwand sind keine Türen vorgesehen. Dennoch weist der Kofferaufbau K hier einen Stirnwandrahmen 200 auf.

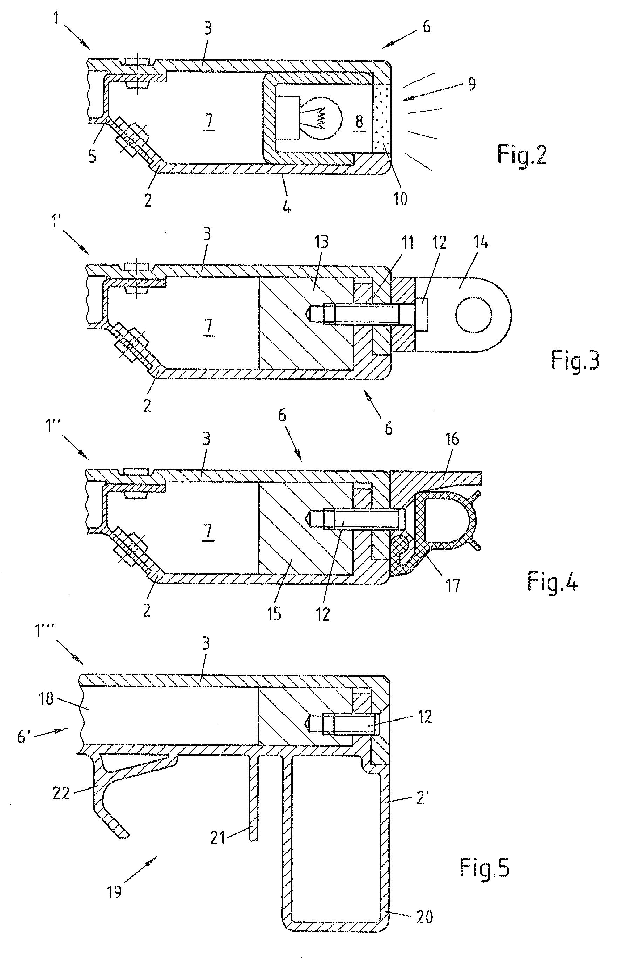

In der Fig. 2 ist ein Schnitt durch ein erstes Rahmenelement 1 in Form eines Rückwandrahmens dargestellt. Das Rahmenelement 1 setzt sich aus einem inneren Teilprofil 2 und einem äußeren Teilprofil 3 zusammen. Das innere Teilprofil 2 besteht seinerseits wiederum aus dem Grundprofil 4 und einem Zusatzprofil 5, welches zum Verbinden mit einem Dachpaneel und/oder einem Seitenwandpaneel dient und an das Grundprofil genietet ist. Nicht im Einzelnen dargestellt ist, dass das innere Teilprofil 2 an der Innenseite des Rückwandrahmens angeordnet und somit dem Innenraum des Kofferaufbaus zugewandt ist. Das äußere Teilprofil 3 bildet im dargestellten Detail eines Kofferaufbaus die äußere Hülle des Kofferaufbaus.

Die eigentliche Verbindung des Rahmenelements mit dem benachbarten Seitenwandpaneel oder Dachpaneel ist in der Fig. 2 nicht im Einzelnen dargestellt, da diese Verbindung im Zusammenhang mit der Erfindung nur eine untergeordnete Rolle spielt.

Das innere Teilprofil 2 und das äußere Teilprofil 3 bilden zusammen ein Hohlprofil 6. Das Hohlprofil 6 bildet einen Hohlraum 7, in dem eine interne Ausstattungskomponente in Form einer Beleuchtungseinrichtung 8 aufgenommen ist. Bei der Beleuchtungseinrichtung 8 kann es sich etwa um Rücklichter oder Rückfahrscheinwerfer handeln. Das Hohlprofil 6 weist eine nach außen weisende Aussparung 9 auf, in der ein Scheibenelement 10 der Beleuchtungsereinrichtung 8 vorgesehen ist, so dass das Licht des Leuchtmittels nach außen scheinen kann.

Das in der Fig. 3 dargestellte Rahmenelement 1' in Form eines weiteren Rückwandrahmens ist in seinem Aufbau ähnlich zu dem in Fig. 2 dargestellten Rahmenelement 1, weshalb hier nur auf die Unterschiede eingegangen wird. Das innere Teilprofil 2 und das äußere Teilprofil 3 bilden zusammen etwa ein U-förmiges Profil. An der geschlossenen Seite des U-förmigen Profils überlappen die beiden Teilprofile 2,3. Das innere und das äußere Teilprofil 2,3 sind im Bereich dieser Überlappung 11 miteinander verbunden. Die Verbindung 12 ist mittels einer Schraube realisiert. Die Schraube reicht bis in den Hohlraum 7 des Hohlprofils 6 und greift dort in eine interne Ausstattungskomponente in Form einer Verstärkungskomponente 13 ein, die besonders steif ist und lokal zur Aussteifung des Rückwandrahmens beiträgt. Außerhalb des Hohlprofils 6 ist an diesem eine äußere Ausstattungskomponente in Form eines Scharniers 14 angebracht und ebenfalls mit derselben Verbindung 12 fixiert. Bei dem dargestellten Rückwandrahmen wird wenigstens abschnittsweise durch eine einzige Verbindung einerseits eine interne Ausstattungskomponente und eine externe Ausstattungskomponente an dem Hohlprofil fixiert und andererseits das innere Teilprofil 2 und das äußere Teilprofil 3 zum Hohlprofil 6 verbunden.

Bei dem in der Fig. 4 dargestellten Rahmenelement 1'' ist neben einer Verstärkungskomponente 15, bei der es sich um einen Eckverstärker handeln kann, als externe Ausstattungskomponente ein Ladebordwandprofil 16 vorgesehen, das im Wesentlichen entlang des gesamten Seitenwandpaneels oder Dachpaneels, an dem das Rahmenelement 1'' vorgesehen ist, zur Aufnahme sowie Abdichtung einer Ladebordwand dient. Hierzu weist das Ladebordwandprofil 16 eine entsprechende Dichtung 17 auf. Auch bei der in der Fig. 4 dargestellten Ausführungsform sind vier unterschiedliche Komponenten über eine einzige Schraubverbindung 12 miteinander verbunden.

Das in der Fig. 5 dargestellte Rahmenelement 1''' in Form eines Rückwandrahmens unterscheidet sich von den in den Fig. 1 bis 4 dargestellten Rückwandrahmen zum einen dadurch, dass das Hohlprofil 6, das ebenfalls aus einem inneren Teilprofil 2' und einem äußeren Teilprofil 3 zusammengesetzt ist, eine Öffnung 18 zum entsprechenden, nicht dargestellten Seitenwandpaneel oder Dachpaneel hin aufweist. Das Hohlprofil 6' ist also nicht vollständig geschlossen. Zum anderen unterscheidet sich das Rahmenelement 1''' durch das innere Teilprofil 2' von in den Fig. 2 bis 4 dargestellten Rahmenelementen 1, 1', 1''. Das innere Teilprofil 2' weist Mittel 19 zum Führen und Aufnehmen eines Rolltors auf. Anhand dieser Mittel ergibt sich, dass das Rahmenelement einem Seitenwandpaneel zugeordnet ist. Zur Rückseite des Rückwandrahmens hin, wobei die Rückseite durch das geschlossene Ende des U-förmigen Hohlprofils 6' festgelegt wird, ist eine Blende 20 vorgesehen, hinter der eine Rippe 21 parallel zur Blende 20 verläuft. Beide Bauteile bilden eine Aufnahme für das nicht dargestellte Rolltor. Zusätzlich kann das Rolltor auch noch Rollen oder andere Mittel aufweisen, die dann zwischen der Rippe 21 und dem dahinter angeordneten Halteprofil 22 aufgenommen werden können.

Aus den Unterschieden der in den Figuren 2 bis 5 dargestellten Rahmenelemente 1, 1', 1'', 1''' geht das Baukastenprinzip hervor, auf dem der Aufbau der unterschiedlichen Rahmenelemente beruht. Es können bei unterschiedlichen Ausgestaltungen des Rahmenelements dennoch immer wieder die gleichen Komponenten verbaut werden.

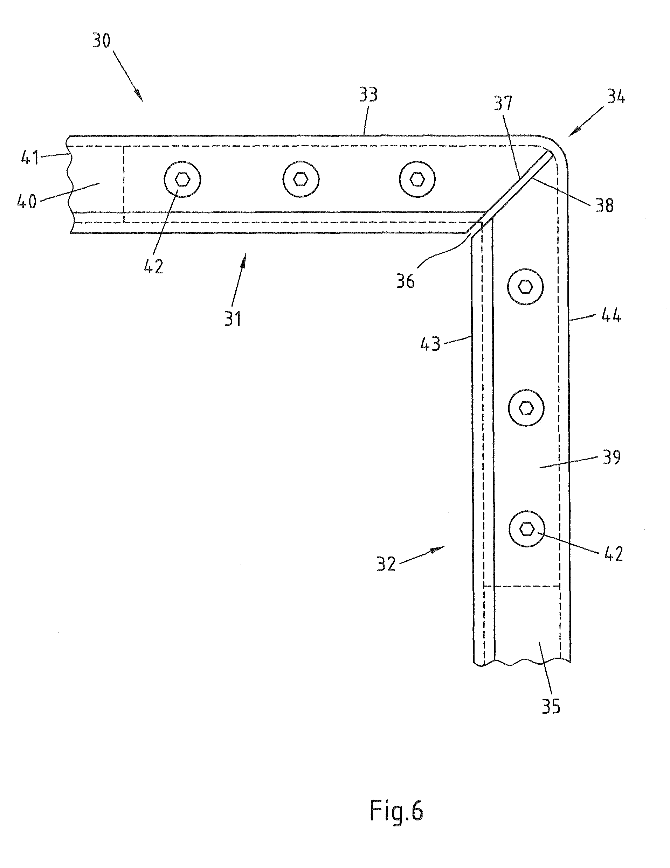

In der Fig. 6 ist ein Rahmenelement 30 dargestellt, das sich sowohl entlang wenigstens eines Seitenwandpaneels als auch entlang eines Dachpaneels erstreckt und somit einen Dachabschnitt 31 und wenigstens einen Seitenwandabschnitt 32 aufweist. Der dargestellte und insoweit bevorzugte Rückwandrahmen 33 ist in dem dargestellten Eckabschnitt 34 durch Umbiegen des äußeren Teilprofils 25 erhalten worden. Dabei ist das zunächst lang gestreckte äußere Teilprofil 35 zunächst mit einer Ausnehmung 36 versehen worden. Diese ist V-förmig und gerade so groß, dass der fertige Rückwandrahmen 33 eine im Wesentlichen geschlossene Form aufweist. Von der Ausnehmung 36 sind die beiden fast parallel zueinander verlaufenden Ränder 37, 38 zu erkennen.

Im Übrigen ist im Eckabschnitt 34 des Rückwandrahmens 33 ein so genannter Eckverstärker 39 vorgesehen, der sich über den gesamten Eckabschnitt 34 erstreckt. Der Eckverstärker 39 weist also einen Knick auf und erstreckt sich von einem Seitenwandabschnitt 32 zu einem Dachabschnitt 31 des Rückwandrahmens 33 und ist im Hohlraum 40 des Hohlprofils 41 aufgenommen. Zudem ist der Eckverstärker 39 über die in der Fig. 6 dargestellten Schraubverbindungen 42 fixiert, die bedarfsweise auch das innere Teilprofil 43 und das äußere Teilprofil 35 miteinander verbinden. Dies ist aber nicht erforderlich.

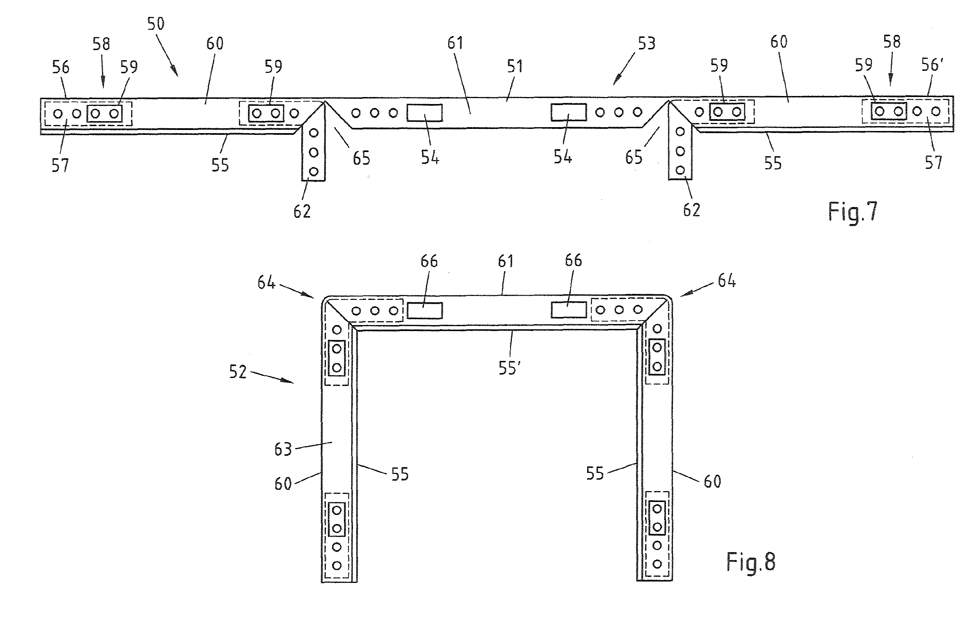

In der Fig. 7 ist ein Rahmenelement 50 in einem lang gestreckten Zustand dargestellt, bevor die Ecken des Rahmenelements 50 durch Umbiegen desselben hergestellt sind. Anschließend hat das Rahmenelement 50 die in der Fig. 8 dargestellte Form. In der Fig. 7 weist das Rahmenelement 50 ein lang gestrecktes äußeres Teilprofil 51 auf, das zunächst mit einem speziell für den herzustellenden Rückwandrahmen 52 vorgegebenen Bohrbild 53 versehen worden ist. Zudem sind an zuvor für den Einzelfall festgelegten Bereichen Aussparungen 54 für Beleuchtungseinrichtungen vorgesehen. Im noch handlichen, da noch nicht mit dem inneren Teilprofil 55 verbundenen und noch nicht an den Ecken umgebogenen Zustand werden dann entsprechend dem Bohrbild 53 bestimmte interne und externe Ausstattungskomponenten angebracht.

An dem in der Fig. 7 dargestellten, äußeren Teilprofil 51 eines Rückwandrahmens 52 sind bereits an den Endabschnitten 56, 56' des äußeren Teilprofils 51 Verstärkungskomponenten 57 festgeschraubt. Dabei sind jeweils zwei dieser Verbindungen 58 ebenfalls noch durch Scharniere 59 geführt, die damit in einem Arbeitsschritt mit angeschraubt sind. Angrenzend zu dem Dachabschnitt des äußeren Teilprofils 51 sind an dessen Seitenwandabschnitten 61 zudem noch mit jeweils einer Seite Eckverstärker 62 fixiert, wobei mit diesen auf die beschriebene Weise jeweils ein Scharnier 59 verschraubt ist.

An den Seitenwandabschnitten 60 wird das äußere Teilprofil 51 nach dem Anbringen der internen Ausstattungskomponenten und externen Ausstattungskomponenten mit zwei Seitenwandpaneelen zugeordneten inneren Teilprofilen 55 verbunden. An den Seitenwandabschnitten 60 ist also bereits das Hohlprofil 63 vervollständigt worden. Dies ist im Dachabschnitt 61 noch nicht der Fall. Dort wird das äußere Teilprofil 51 erst nach dem Umbiegen in den Eckabschnitten 64 mit dem einen Dachpaneel zugeordneten inneren Teilprofil 55' verbunden.

Zum einfacheren Umbiegen der Eckabschnitte 64 sind zuvor bereits V-förmige Ausnehmungen 65 aus dem äußeren Teilprofil 51 herausgearbeitet worden. Dies ist notwendig, weil das äußere Teilprofil mit konstantem Querschnitt endlos extrudiert oder stranggepresst ist und so überschüssiges Material entfernt werden muss. Das Umbiegen erfolgt um die bereits mit jeweils einer Seite befestigten Eckverstärker 62 herum, die letztlich ein Teil des dafür benötigten Werkzeugs bilden. Nach dem Umbiegen, dem Einbringen letzter Ausstattungskomponenten wie der Beleuchtungseinrichtungen 65 und dem Verbinden des dem Dachelement zugeordneten inneren Teilprofils 55' werden alle restlichen Teile verbunden, wobei durch die Multifunktionalität der Schraubverbindungen sehr wenige Schrauben 58 angezogen werden müssen.

Alternativ kann das Hohlprofil auch über seine gesamte spätere Länge vor dem Biegen bereits aus einem äußeren Teilprofil und einem inneren Teilprofil zusammengesetzt sein. Dann werden V-förmige Ausnehmungen in das Hohlprofil eingebracht und das Hohlprofil als solches in den Eckabschnitten umgebogen. Dies ist einfacher als die Montage der einzelnen inneren Teilprofile in unterschiedlichen Fertigungsschritten. Allerdings ist dann eine entsprechende Vorkonfektionierung in gleichem Umfang nicht oder nur mit einem höheren Aufwand möglich. Dies gilt insbesondere hinsichtlich der Befestigung der einzelnen Ausstattungskomponenten, des äußeren Teilprofils und des inneren Teilprofils untereinander.

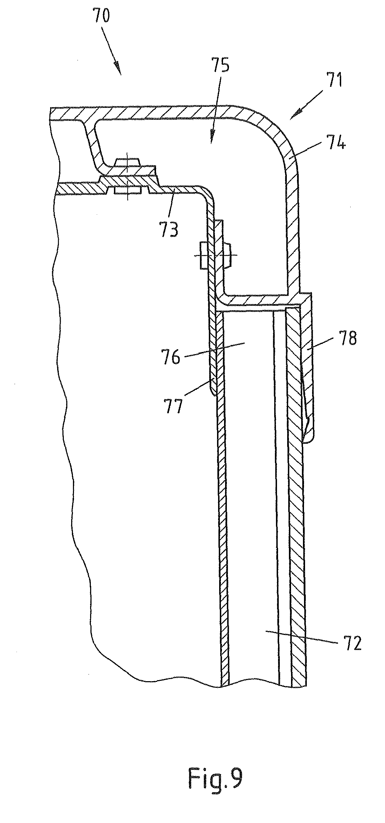

In der Fig. 9 ist ein Rahmenelement 70 in Form eines Stirnwandrahmens dargestellt, der eine Kante 71 zwischen einem nicht dargestellten Dachpaneel und einem Stirnwandpaneel 72 bildet. Auch dieses Rahmenelement 70 ist aus einem inneren Teilprofil 73 und einem äußeren Teilprofil 74 zusammengesetzt und bildet ein Hohlprofil 75. Zudem bilden das innere Teilprofil 73 und das äußere Teilprofil 74 ein nach unten geöffnetes, sich längs der Kante erstreckendes Nutprofil 76, in dem die Stirnwand 72 aufgenommen ist. Das innere Teilprofil 73 bildet dabei die innere Nutflanke 77, während das äußere Teilprofil 74 die äußere Nutflanke 78 bildet. Der Nutgrund 79 kann von einem der Teilprofile 73, 74 oder von beiden zusammen gebildet werden. Dieses Ausführungsbeispiel erlaubt es, mit dem Zusammenbau von innerem Teilprofil 73 und äußerem Teilprofil 74 zum Hohlprofil 75 gleichzeitig das Hohlprofil mit der Stirnwand 72 zu verbinden, auch wenn die Verbindung hier nur in einem möglichst formschlüssigen Einstecken besteht.

## Patentansprüche

1. Rahmenelement (1, 1', 1'', 1''', 30, 50, 70) einer Stirnwand und/oder einer Rückwand eines Kofferaufbaus eines Nutzfahrzeugs, mit einem im Wesentlichen geschlossenen Hohlprofil (6, 6', 41, 63), wobei sich das Hohlprofil (6, 6', 41, 63) in Längsrichtung entlang eines Seitenwandpaneels und/oder eines Dachpaneels erstreckt,
**dadurch gekennzeichnet, dass**
das Hohlprofil (6, 6', 41, 63) in Längsrichtung zweigeteilt und aus wenigstens einem dem Äußeren des Kofferaufbaus zugeordneten äußeren Teilprofil (3, 35, 51, 74) und einem dem Inneren des Kofferaufbaus zugeordneten inneren Teilprofil (2, 2', 43, 55, 55', 73) zusammengesetzt ist.

2. Rahmenelement nach Anspruch 1, **dadurch**
**gekennzeichnet, dass** das äußere Teilprofil (3, 35, 51, 74) einen Teil einer äußeren Hülle des Kofferaufbaus bildet.

3. Rahmenelement nach Anspruch 1 oder 2, **dadurch**
**gekennzeichnet, dass** das innere Teilprofil (2, 2', 43, 55, 55', 73) einen Teil einer inneren Hülle des Kofferaufbaus bildet.

4. Rahmenelement nach einem der voranstehenden Ansprüche,
**dadurch gekennzeichnet, dass**
im Hohlprofil (6, 6', 41, 63) wenigstens eine interne Ausstattungskomponente in Form einer Verstärkungskomponente (13) eines Eckverstärkers (15, 39, 62) und/oder einer Beleuchtungseinrichtung (8, 66) aufgenommen ist.

5. Rahmenelement nach Anspruch 4, **dadurch**
**gekennzeichnet, dass** wenigstens eine Verbindung (12, 42, 58) zum Befestigen der internen Ausstattungskomponente am Hohlprofil und gleichzeitig zum Verbinden des inneren Teilprofils (2, 2', 43, 55, 55') und des äußeren Teilprofils (3, 35, 51) miteinander vorgesehen ist.

6. Rahmenelement nach einem voranstehenden Ansprüche,
**dadurch gekennzeichnet, dass**
am Hohlprofil (6, 6', 63) wenigstens eine externe Ausstattungskomponente in Form eines Scharniers (14, 59) oder eines Ladebordwandprofils (16) zur Aufnahme und/oder Abdichtung einer Ladebordwand befestigt ist.

7. Rahmenelement nach Anspruch 6, **dadurch**
**gekennzeichnet, dass** wenigstens eine Verbindung (12, 42, 58) zum Befestigen der externen Ausstattungskomponente am Hohlprofil (6, 6', 41, 63) und gleichzeitig zum Verbinden des inneren Teilprofils (2, 2', 43, 55, 55') und des äußeren Teilprofils (3, 35, 51) miteinander vorgesehen ist.

8. Rahmenelement nach Anspruch 7, **dadurch**
**gekennzeichnet, dass** wenigstens eine Verbindung (12, 42, 58) zum Befestigen einerseits der internen Ausstattungskomponente und andererseits der externen Ausstattungskomponente am Hohlprofil (6, 6', 41, 63) sowie gleichzeitig zum Verbinden des inneren Teilprofils (2, 2', 43, 55, 55') und des äußeren Teilprofils (3, 35, 51) miteinander vorgesehen ist.

9. Rahmenelement nach einem der voranstehenden Ansprüche,
**dadurch gekennzeichnet, dass**
sich das innere Teilprofil (55') wenigstens abschnittsweise entlang des Dachpaneels erstreckt und zur Aufnahme eines Rolltors ausgebildet ist.

10. Rahmenelement nach Anspruch 9, **dadurch**
**gekennzeichnet, dass** sich das innere Teilprofil (2') wenigstens abschnittsweise entlang wenigstens eines Seitenwandpaneels erstreckt und zur Führung eines Rolltors ausgebildet ist.

11. Rahmenelement nach einem der Ansprüche 1 bis 3,
**dadurch gekennzeichnet, dass**
das Hohlprofil (75) eine Kante des Kofferaufbaus bildet und das äußere Teilprofil (74) die Außenseite der Kante und das innere Teilprofil (73) die Innenseite der Kante bildet.

12. Rahmenelement nach Anspruch 11, **dadurch**
**gekennzeichnet, dass** das innere Teilprofil (73) und das äußere Teilprofil (74) ein nach unten geöffnetes Nutprofil (76) zum Einstecken eines Wandpaneels (72) bilden.

13. Rahmenelement nach einem der voranstehenden Ansprüche,
**dadurch gekennzeichnet, dass**
das äußere Teilprofil (35, 51) oder das innere Teilprofil (43, 55, 55') ein dem wenigstens einen Seitenwandpaneel zugeordneten Seitenwandabschnitt (32, 60) und ein dem Dachpaneel zugeordneten Dachabschnitt (31, 61) aufweist und dass der wenigstens eine Seitenwandabschnitt (32, 60) und der Dachabschnitt (31, 61) durch einen durch Biegen um eine Achse senkrecht zur Längsrichtung des äußeren Teilprofils (35, 51) oder des inneren Teilprofils (43, 55, 55') geformten Eckabschnitt (34, 64) miteinander verbunden sind.

14. Rahmenelement nach Anspruch 13, **dadurch**
**gekennzeichnet, dass** das äußere Teilprofil (35, 51) oder das innere Teilprofil (43, 55, 55') zwei jeweils einem Seitenwandpaneel zugeordnete Seitenwandabschnitte (32, 60) und ein dem Dachpaneel zugeordneten Dachabschnitt (31, 61) aufweisen und dass der Dachabschnitt (31, 61) an gegenüber liegen Enden jeweils durch einen durch Biegen um eine Achse senkrecht zur Längsrichtung des äußeren Teilprofils (35, 51) oder des inneren Teilprofils (43, 55, 55') geformten Eckabschnitt (34, 64) mit einem Seitenwandabschnitt (32, 60) verbunden ist.

15. Rahmenelement nach einem der Ansprüche 1 bis 13,
**dadurch gekennzeichnet, dass**
das Hohlprofil (41, 63) ein dem wenigstens einen Seitenwandpaneel zugeordneten Seitenwandabschnitt (32, 60) und ein dem Dachpaneel zugeordneten Dachabschnitt (31, 61) aufweist und dass der wenigstens eine Seitenwandabschnitt (32, 60) und der Dachabschnitt (31, 61) durch einen durch Biegen um eine Achse senkrecht zur Längsrichtung des äußeren Teilprofils (35, 51) geformten Eckabschnitt (34, 64) miteinander verbunden sind.

16. Rahmenelement nach Anspruch 15, **dadurch**
**gekennzeichnet, dass** das Hohlprofil (41, 63) zwei jeweils einem Seitenwandpaneel zugeordnete Seitenwandabschnitte (32, 60) und ein dem Dachpaneel zugeordneten Dachabschnitt (31, 61) aufweist und dass der Dachabschnitt (31, 61) an gegenüber liegen Enden jeweils durch einen durch Biegen um eine Achse senkrecht zur Längsrichtung des Hohlprofils (41, 63) geformten Eckabschnitt (34, 64) mit einem Seitenwandabschnitt (32, 60) verbunden ist.

17. Rahmenelement nach einem der voranstehenden Ansprüche,
**dadurch gekennzeichnet, dass**
das innere Teilprofil (43, 55, 55') und/oder äußere Teilprofil (35, 51) im Bereich des wenigstens einen Eckabschnitts (34, 64) eine Ausnehmung (36, 65) zur Vereinfachung der Biegung aufweist.

18. Rahmenelement nach einem der voranstehenden Ansprüche,
**dadurch gekennzeichnet, dass**
das innere Teilprofil (2, 2', 43, 55, 55', 73) und/oder äußere Teilprofil (3, 35, 51, 74) stranggepresst oder extrudiert ist.

19. Rahmenelement nach einem der voranstehenden Ansprüche,
**dadurch gekennzeichnet, dass**
das innere Teilprofil (2, 2', 43, 55, 55', 73) und/oder äußere Teilprofil (3, 35, 51, 74) aus einem thermoplastischen Kunststoffmaterial, vorzugsweise Acrylnitril-Butadien-Styrol-Copolymerisat (ABS), gefertigt ist.

20. Rahmenelement nach einem der voranstehenden Ansprüche,
**dadurch gekennzeichnet, dass**
das innere Teilprofil (2, 2', 43, 55, 55', 73) und/oder äußere Teilprofil (3, 35, 71, 74) aus einem wärmeformbaren metallischen Werkstoff, vorzugsweise aus Aluminium, gefertigt ist.
